# FASCICULE DE BREVET EUROPEEN

(11) **EP 2 595 856 B1**
(45) Date de publication et mention de la délivrance du brevet: **25.02.2015**
(21) Numéro de dépôt: 11741652.9
(22) Date de dépôt: 11.07.2011
(51) Int. Cl.: B62D 25/20

(54) **CHASSIS AVEC PLANCHER ARRIERE REHAUSSÉ ET PROCÉDÉ D'ASSEMBLAGE**
FAHRZEUGCHASSIS MIT ERHÖHTEM BODEN UND DESSEN ZUSAMMENBAUVERFAHREN
CAR FRAME WITH A LOCALLY ELEVATED FLOOR AND METHOD FOR ITS ASSEMBLY

(30) Priorité: 23.07.2010 FR 1056042
(43) Date de publication de la demande: 29.05.2013
(73) Titulaire: Renault S.A.S., 92100 Boulogne-Billancourt (FR)
(72) Inventeur: TABUTEAU, Pascal, F-78180 Montigny le Bretonneux (FR); MAUDUIT, Thomas, F-78960 Voisins Le Bretonneux (FR); BISROR, Olivier, F-92350 Le Plessis Robinson (FR)
(86) Numéro de dépôt international: PCT/FR2011/051643
(87) Numéro de publication internationale: WO 2012/010769

(56) Documents cités:
- DE-A1- 19 950 165
- DE-A1-102007 047 037
- DE-A1-102008 059 682
- JP-A- 7 156 826
- US-A- 1 553 527
- US-A1- 2006 289 224

## Description

L'invention se situe dans le domaine des châssis pour véhicule automobile, notamment des véhicules à propulsion électrique ou hybride. Afin d'assurer une autonomie suffisante aux véhicules à propulsion électrique ou hybride, des batteries d'accumulateur doivent être embarquées. Le volume de ces batteries est sensiblement plus important que celui occupé par un réservoir d'énergie traditionnelle comme par exemple un réservoir d'essence.

Une solution consiste à exploiter un volume délimité sous le siège des passagers, en modifiant le profil du plancher de manière à isoler ce volume de l'habitacle. Le siège des passagers repose alors directement sur une zone surélevée du plancher. La hauteur du siège peut être la même que dans des véhicules de la même gamme construits pour être propulsés par un moteur thermique, ou peut être plus élevée.

La demande de brevet JP 07 156 826 décrit ainsi une structure de châssis pour véhicule automobile à propulsion électrique, dans laquelle un volume sous les sièges des passagers avant et arrière est réservé pour la batterie en séparant ce volume de l'habitacle. Des plaques de rehausse verticales sont placées à l'avant et à l'arrière des sièges, une zone d'assise de plancher surélevée s'étend entre ces plaques de rehausse verticales et des supports de rehausse latéraux fixés aux flancs latéraux de la carrosserie.

Le Document DE 1995 0165 A décrit une telle structure avec des longerons en U fermés dans leur partie supérieure sur une partie avant.

Une telle structure n'est pas applicable pour un véhicule à trois portes puisqu'il faut que les sièges des passagers arrière soient bordés par des flancs fixes de carrosserie auxquels les supports de rehausse latéraux sont assemblés. En outre, dans le cas où l'on souhaite décliner un même véhicule dans un modèle à propulsion électrique et dans un modèle à propulsion par moteur thermique, la ligne de points de soudure permettant d'assembler les éléments de plancher aux longerons du véhicule ne peut pas avoir la même géométrie pour le véhicule électrique et pour le véhicule thermique. On est alors obligé de mettre en place, pour la production des deux véhicules, deux lignes de soudage distinctes, ce qui renchérit à la fois les coûts de développement et de production.

L'invention a pour but de proposer une géométrie de châssis pour véhicule électrique ou pour un autre véhicule nécessitant un volume de réservoir d'énergie plus élevé que les classiques réservoirs de combustibles.

L'invention a également pour but de proposer une géométrie de châssis qui permette de produire en parallèle des véhicules à propulsion électrique et des véhicules à propulsion par moteur thermique qui utilisent un grand nombre de composants et de moyens de production communs.

A cette fin, l'invention propose un châssis de véhicule automobile comportant deux longerons de section en U recouverts et fermés sur une partie avant par deux plaques formant renforts latéraux de plancher, et une traverse centrale arrière reliant les longerons et affleurant au niveau des renforts latéraux de plancher, les renforts latéraux présentant un bord interne comportant une bande de soudage, caractérisé en ce que le châssis comporte une zone rehaussée de plancher formant à la fois assise de siège et logement pour un réservoir d'énergie, comportant une plaque formant support d'assise disposée par-dessus une plaque de rehausse formant renfort transversal et fixée par soudure sur les deux renforts latéraux de plancher, par dessus une pièce de rehausse arrière fixée par soudure sur la traverse centrale arrière et par-dessus deux plaques formant pièces de rehausse latérales et fixées par soudure chacune le long d'une des bandes de soudage d'un renfort latéral, la partie support d'assise du plancher étant fixée par soudure sur les deux pièces de rehausse latérales, sur la pièce de rehausse arrière et sur le renfort transversal.

Le logement ainsi ménagé sous la partie support d'assise se trouve donc à l'avant de la traverse centrale arrière, et est bordé latéralement par les deux pièces de rehausse latérales.

L'utilisation des pièces de rehausse latérales permet de concevoir l'ensemble des éléments assurant la surélévation du plancher sans modification substantielle du processus d'assemblage par soudure. En particulier, la disposition des lignes de soudure prévues le long des renforts latéraux de plancher dans le cas d'un châssis de véhicule à propulsion thermique peut être conservée pour l'assemblage des rehausses latérales. Ainsi, une même chaîne d'assemblage automatique peut être utilisée pour produire des véhicules à propulsion électrique et des véhicules à propulsion thermique.

Le plancher peut en outre présenter une partie arrière fixée par soudure aux deux longerons et à la pièce de rehausse arrière.

Selon un autre mode de réalisation, la partie arrière du plancher peut être fixée par soudure aux deux longerons et à la traverse centrale arrière. Dans les deux modes de réalisation, la partie arrière du plancher est une pièce distincte de la partie support d'assise du plancher.

Avantageusement, la partie support d'assise du plancher présente une plaque avant recouvrant le renfort transversal, et assemblée au renfort transversal par au moins deux cordons de soudure de manière à former un corps creux limité par la plaque avant et par le renfort transversal.

Dans ce mode de réalisation, la plaque avant et le renfort transversal peuvent ainsi être rendus solidaires par une première ligne de soudure longeant la partie supérieure du support d'assise, et être également être rendus solidaires par une seconde ligne de soudure longeant un bord inférieur de la plaque avant. De cette manière, on obtient une bonne rigidité de la partie avant du logement du réservoir d'énergie. Un plancher avant peut être aussi assemblé à la plaque avant et au renfort transversal par la seconde ligne de soudure

De manière préférentielle, le renfort transversal s'étend uniquement entre les côtés internes des deux renforts latéraux de plancher. La zone rehaussée du plancher est ainsi indépendante des parties latérales de carrosserie du véhicule, ce qui permet d'utiliser le même châssis aussi bien pour des véhicules à trois portes que pour des véhicules à cinq portes.

Selon un mode de réalisation préféré, la pièce de rehausse arrière comprend une plaque verticale et une plaque horizontale par laquelle se fait la fixation par soudure sur la traverse centrale arrière. Un caisson creux de renfort est défini du côté arrière, par ladite plaque horizontale, une plaque formant cadre de fermeture fixée par soudure sur la plaque horizontale et une prolongation de la partie support d'assise du plancher.

Avantageusement, le caisson creux de renfort comporte, à l'intérieur, au moins un renfort d'ancrage fixé à la plaque verticale de la pièce de rehausse arrière et au cadre de fermeture.

Selon un autre aspect, dans un procédé d'assemblage d'éléments constitutifs d'un châssis de véhicule automobile :
- on fournit une partie inférieure de châssis comportant deux longerons recouverts sur l'avant par deux plaques formant renforts latéraux de plancher, et comprenant une traverse centrale arrière joignant les longerons et affleurant au niveau des renforts latéraux de plancher, les renforts latéraux présentant un bord interne comportant une bande de soudage,
- on assemble sur cette partie inférieure, une zone rehaussée de plancher formant à la fois assise de siège et logement pour un réservoir d'énergie, en fixant par soudure aux deux renforts latéraux de plancher, une plaque de rehausse formant renfort transversal entre ces deux renforts latéraux, en fixant par soudure sur la traverse centrale arrière une pièce de rehausse arrière, en fixant par soudure deux plaques formant des pièces de rehausse latérales, chacune le long d'une des bandes de soudage d'un renfort latéral, et en assemblant une plaque formant support d'assise du plancher par soudure sur les deux pièces de rehausse latérales, sur la pièce de rehausse arrière et sur le renfort transversal, par-dessus les trois pièces de rehausse et par-dessus le renfort transversal.

Ainsi, les lignes de points de soudure, prévues le long du bord interne des renforts latéraux de plancher, peuvent servir soit à assembler une partie support d'assise non rehaussée, soit à assembler la partie support d'assise prévue dans le procédé, en intercalant entre le support d'assise et les renforts latéraux de plancher, les pièces de rehausse latérales.

Selon un mode de mise en oeuvre préféré, on fixe par soudure aux deux longerons et à la pièce de rehausse arrière, une partie arrière de plancher.

Selon un autre mode de réalisation, on peut fixer par soudure aux deux longerons et à la traverse centrale arrière, une partie arrière de plancher.

De manière préférentielle, on utilise un renfort transversal de hauteur correspondant sensiblement à celle de la pièce de rehausse arrière.

La présente invention sera mieux comprise à la lecture de la description détaillée de quelques modes de réalisation pris à titre d'exemples nullement limitatifs, et illustrés par les dessins annexés, sur lesquels :
- la figure 1 est une vue en perspective éclatée de quelques éléments d'un châssis selon l'invention,
- la figure 2 est une vue en perspective de quelques éléments du châssis de la figure 1 complémentaire des éléments présents sur la figure 1,
- la figure 3 est une vue en perspective du châssis de la figure 1 partiellement assemblé,
- la figure 4 est une vue schématique en coupe d'une portion assemblée du châssis des figures 1 à 3.

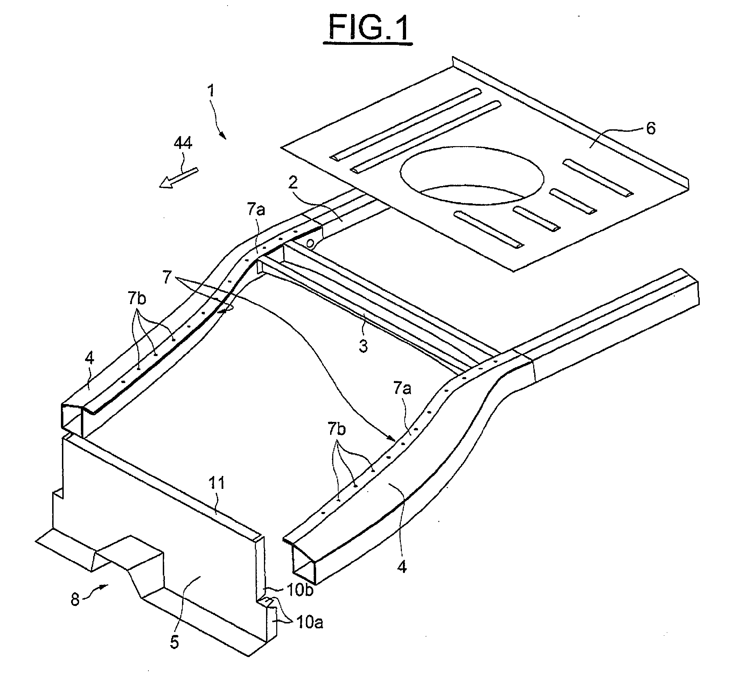

La flèche 44 de la figure 1 indique l'avant du véhicule (non représenté), qui se trouve sur la gauche pour les figures 1 à 4.

Tel qu'illustré sur la figure 1, un châssis 1 est délimité latéralement par deux longerons 2 sous forme de poutres en U, reliés transversalement par une traverse centrale arrière 3 également constituée par une poutre en U. La partie supérieure des longerons 2 est fermée vers l'avant de la traverse arrière 3 par deux renforts latéraux de plancher 4. Les renforts latéraux de plancher 4 sont constitués chacun par une tôle emboutie de direction sensiblement horizontale, remontant vers le centre du véhicule, vers un bord interne 7 du renfort latéral 4. Le bord interne 7 du renfort latéral 4 comporte une bande de soudage 7a apte à être soudée par recouvrement avec une bande de soudage d'une tôle similaire, et à être soudé simultanément avec le bord interne du longeron 2. Une ligne de points de soudures 7b est illustrée sur la figure 1 le long de la bande 7a, et constitue une ligne de repérage pour un outil automatique de soudage (non représenté).

Un plancher arrière 6 est destiné à être assemblé sur le dessus des longerons 2, à l'arrière de la traverse arrière 3. Un renfort transversal 5 se présente sous la forme d'une tôle emboutie de direction sensiblement verticale transverse à l'axe du véhicule, dans laquelle est ménagé en partie centrale inférieure, un passage 8. Le renfort transversal 5 présente sur sa périphérie latérale et supérieure des appendices de soudage 10a, 10b et 11 permettant d'assembler le renfort transversal 5 à d'autres éléments en tôle du châssis 1.

Le renfort transversal 5 est notamment muni d'appendices 10a permettant de l'assembler par soudage aux extrémités avant des renforts latéraux 4 et des longerons 2.

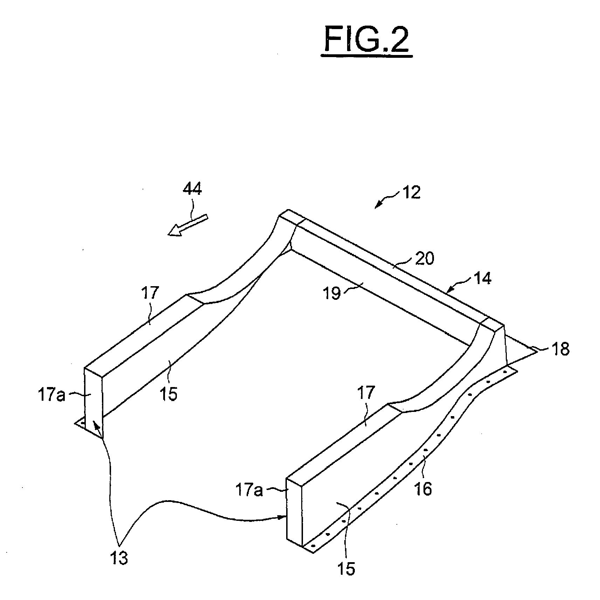

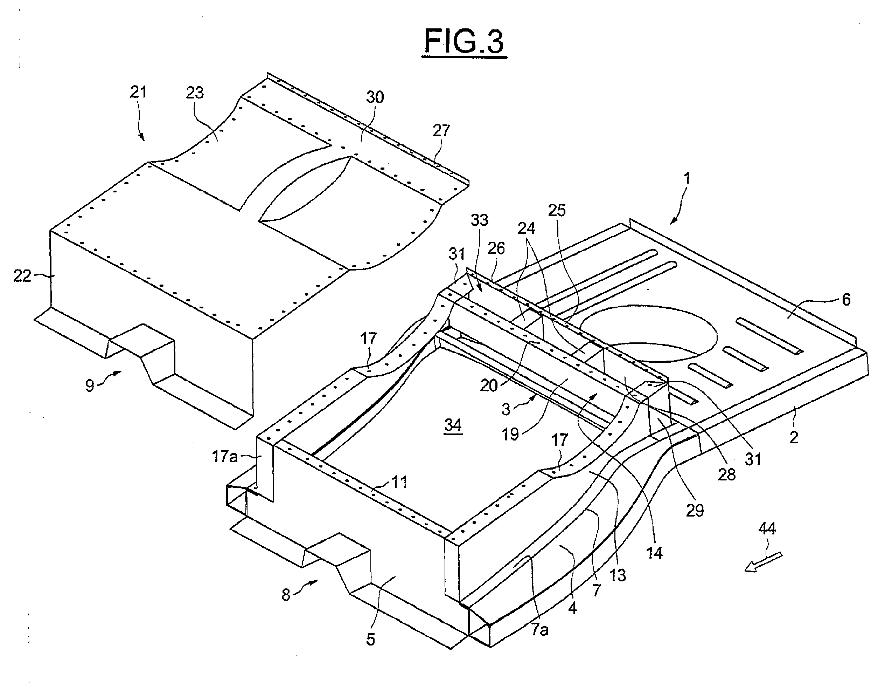

Pour réaliser un châssis destiné à un véhicule à propulsion électrique, on vient assembler, sur les bords internes 7 des renforts latéraux 4 et sur la traverse arrière 3, un cadre de rehausse 12 représenté sur la figure 2, constitué de deux rehausses latérales 13 et d'une rehausse arrière 14. Chaque rehausse latérale 13 est une portion de tôle emboutie et/ou pliée présentant un flanc sensiblement vertical 15 bordé le long de son bord inférieur par une bande de soudage 16 dont la géométrie est complémentaire de celle de la bande de soudage 7a d'un bord interne d'un renfort latéral 7 de la figure 1. La hauteur du renfort transversal 5 est telle qu'après assemblage avec les renforts latéraux 4, comme illustré sur la figure 3, le renfort transversal 5 dépasse largement au dessus des renforts latéraux 4.

Chaque rehausse latérale 13 présente en outre le long de son bord supérieur une bande de soudage 17 repliée sensiblement à angle droit par rapport au plan principal de la tôle. Chaque rehausse latérale 13 présente également à son extrémité avant, un repli vertical de soudage 17a. Le cadre de rehausse 12 comporte en outre une pièce de rehausse arrière 14, faite à partir d'une tôle pliée de manière à former une plaque horizontale 18 apte à recouvrir la traverse arrière 3 et à supporter le bord avant du plancher arrière 6, et une plaque verticale 19, apte à être soudée le long de chacune de ses extrémités verticales à une des rehausses latérales 13. La plaque verticale 19 de la rehausse arrière 14 comporte en partie supérieure une bande de soudage horizontale 20. Les bandes de soudage 17 et 20 du cadre de rehausse 12 permettent ainsi d'accueillir et de souder une partie support d'assise 21 de plancher représentée à la figure 3. On retrouve sur la figure 3 des éléments communs aux figures 1 et 2, les mêmes éléments étant alors désignés par les mêmes références.

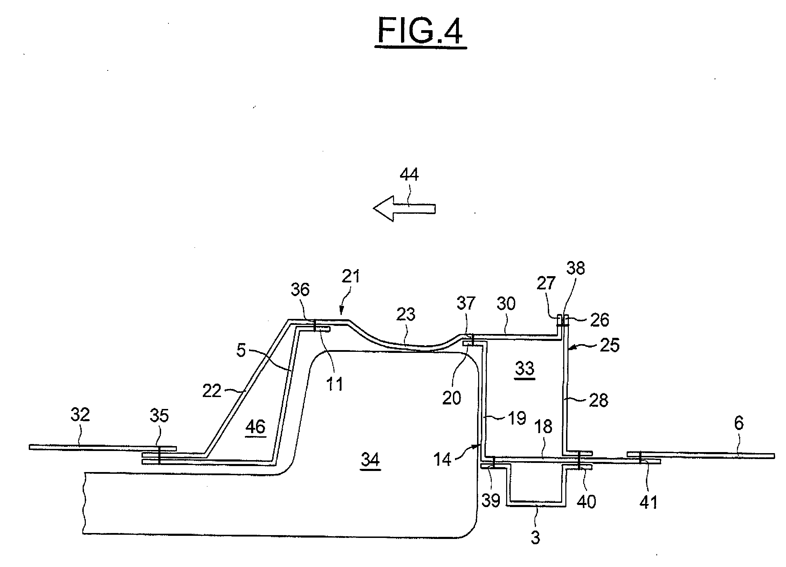

On retrouve ainsi sur la figure 3, des éléments assemblés du châssis de la figure 1. Le renfort transversal 5 est assemblé par soudage des appendices 10a aux parties avant des renforts latéraux de plancher 4 et des longerons 2. Le plancher arrière 6 est assemblé par soudage sur la partie arrière des longerons 2. On retrouve également le cadre de rehausse 12 de la figure 2, assemblé le long de ses bandes de soudage 16, aux bandes de soudage 7a des bords internes 7 des renforts latéraux de plancher 4. Le cadre de rehausse 12 est en outre assemblé sur la traverse arrière 3 par soudage de la plaque horizontale 18 sur cette traverse arrière 3. Le cadre de rehausse 12 est en outre soudé aux bords latéraux du renfort transversal 5 le long de ses replis de soudage 17a, et le long des appendices de soudage 10b du renfort transversal 5. Le renfort transversal 5, les rehausses latérales 13 et la plaque verticale 19 de la pièce de rehausse arrière 14 permettent ainsi de rehausser la partie support d'assise 21 et délimitent ainsi un volume 34 (visible sur la figure 4) qui peut être rendu disponible sous les sièges des passagers arrières. Ce volume est fermé en partie supérieure par la partie support d'assise 21 du plancher, représentée de manière éclatée sur la figure 3. La pièce de support d'assise 21 peut être par exemple une tôle emboutie. Elle comporte en partie supérieure une partie couvercle de fermeture 23 sur laquelle seront installées les armatures de siège (non représentées). Le couvercle 23 est assemblé le long de sa périphérie, aux bandes et appendices de soudage 11, 17 et 20, appartenant respectivement au renfort transversal 5, aux rehausses latérales 13 et à la pièce de rehausse arrière 14.

La pièce de support d'assise 21 comporte également une plaque avant 22 rabattue vers le bas à partir du couvercle 23, apte à couvrir le renfort transversal 5 et dans laquelle est également ménagée une zone de passage 9 destinée à venir s'emboîter sur le passage 8 du renfort transversal 5.

Tel qu'illustré sur la figure 3, le châssis 1 comprend en outre une tôle 25 formant cadre de fermeture, comportant une plaque verticale 28 parallèle à la plaque verticale 19 de la rehausse arrière 14 et deux plaques latérales 29 disposées de manière à définir un caisson creux 33 de renfort entre la tôle arrière 25 et la pièce de rehausse arrière 14. La pièce de support d'assise 21 se prolonge à l'arrière par une plaque d'appui 30 qui vient fermer en partie supérieure le caisson creux de renfort 33. La plaque d'appui 30 est assemblée à la pièce de rehausse arrière 14 le long de la bande de soudure 20, et est assemblée à la tôle de fermeture arrière 25 le long d'une bande de soudage verticale 26. Elle peut également être assemblée à la tôle 25 de fermeture arrière le long de bandes de soudage 31 bordant en partie supérieure les plaques latérales 29 de la tôle de fermeture 25.

A l'intérieur du caisson creux 33 de l'exemple illustré, sont assemblés deux renforts d'ancrage 24. Chaque renfort d'ancrage 24 comprend une tôle de renfort pliée en U. La tôle est positionnée de manière à ce que la face formant la base du U du renfort, relie les bords supérieurs de la partie arrière de la tôle de fermeture 25 et de la plaque verticale de la pièce de rehausse arrière 14. Les extrémités de la tôle de renfort correspondant aux extrémités du U sont assemblées à la plaque horizontale 18 de la pièce de rehausse arrière.

Les renforts d'ancrage 24 sont positionnés, par rapport à un axe transversal au véhicule, au niveau de la fixation des ceintures de sécurité et des sièges. Les renforts d'ancrage 24 servent ainsi à la fois à rigidifier le caisson creux 33 afin d'améliorer la rigidité de la partie rehaussée du plancher, et à transmettre les efforts des ceintures de sécurité ou des ferrures de fixation des sièges passagers à la traverse arrière 3. Dans l'exemple illustré, deux renforts d'ancrage 24 sont utilisés. On comprendra qu'un nombre différent de renforts d'ancrage pourrait être envisagé, par exemple un seul renfort central, ou 3 renforts, ou quatre renforts...

La figure 4 illustre une vue schématique en coupe du châssis assemblé de la figure 3. On retrouve sur la figure 4 des éléments communs aux figures 1 à 3, les mêmes éléments étant alors désignés par les mêmes références. Tel qu'illustré sur la figure 4, une partie de plancher avant 32 et le plancher arrière 6 se trouvent sensiblement au même niveau qui est aussi le niveau que ces planchers pourraient occuper dans un véhicule à propulsion par moteur thermique. La zone de plancher avant 32 est assemblée le long d'une ligne 35 de soudure en trois épaisseurs, au renfort transversal 5 et à la plaque avant 22 de la pièce support d'assise 21.

La plaque avant 22 et le renfort transversal 5 sont également assemblés en partie supérieure le long de l'appendice de soudage 11 du renfort transversal 5. La plaque avant 22 et le renfort transversal 5 délimitent ainsi un corps creux 46 qui agit comme une poutre creuse et améliore la rigidité, dans le sens transverse au véhicule, du tablier ainsi défini devant la zone rehaussée.

Comme illustré sur la figure 3, le couvercle 23 de la pièce support d'assise 21 est soudé le long de ses bords longitudinaux avec les bandes supérieures 17 de soudage des pièces de rehausse latérales 13. On voit sur la figure 4, que ce couvercle 23 est en outre soudé le long de trois lignes de soudure transversales 36, 37 et 38. La ligne de soudure 36 est une ligne de soudure s'étendant le long de l'appendice de soudage 11 du renfort transversal 5. La ligne 37 est une ligne de soudure s'étendant le long de la bande horizontale supérieure 20 de la pièce de rehausse arrière 14, et la ligne de soudure 38 joint les bandes de soudure verticales 27 et 26 appartenant respectivement au bord de la plaque d'appui 30 et au cadre de fermeture 25.

Une ligne de soudure 39 lie le bord de la plaque horizontale 18 de la pièce de rehausse arrière 14 avec le bord avant de la traverse arrière 3. Une ligne de soudure 40 lie la plaque horizontale 18 avec un retour horizontal du cadre de fermeture 25 et avec le bord arrière de la traverse arrière 3. Une ligne de soudure 41 lie le plancher arrière 6 et un débord de la plaque horizontale 18 dépassant vers l'arrière du cadre de fermeture 25 et de la traverse arrière 3.

Il est à noter que les soudures effectuées le long des bandes de soudure 17, 7a, 20, 26 et des appendices de soudure 10a, 10b, 11 peuvent être aussi bien des lignes de soudure continues que des lignes de soudure par points.

L'association du caisson creux 33 avec la traverse centrale arrière 3 qui y est assemblée de manière rigide, permet d'obtenir une structure de poutre transversale présentant une bonne rigidité par rapport à la quantité de matière utilisée. Le plancher arrière 6 pourrait également être assemblé au rebord arrière de la traverse centrale arrière 3.

Par l'agencement décrit sur les figures 1 à 4, on rend disponible sous les sièges passagers arrière, un volume 34 dans lequel peuvent être logés un réservoir d'énergie tel qu'un lot de batteries d'accumulateur ou un réservoir de combustible sous pression. La structure proposée permet de garder la structure supportant les sièges indépendante des bords latéraux de la carrosserie, et convient ainsi aussi bien à un véhicule à trois portes qu'à un véhicule à cinq portes.

En outre, cette structure permet de réutiliser pour la production d'un véhicule à propulsion électrique, un nombre important de pièces convenant également pour réaliser le châssis d'un véhicule conventionnel à propulsion par moteur thermique. Elle permet également d'utiliser, pour la production d'un châssis pour véhicule électrique et pour la production d'un châssis pour véhicule à propulsion thermique, les mêmes chaînes de soudage pour assembler aux renforts latéraux de plancher une zone de plancher support d'assise rehaussé ou une zone de plancher support d'assise non rehaussée.

## Revendications

1. Châssis (1) de véhicule automobile comportant deux longerons (2) de section en U recouverts et fermés dans leur partie supérieure sur une partie avant par deux plaques formant renforts latéraux (4) de plancher, et une traverse centrale arrière (3) reliant les longerons et affleurant au niveau des renforts latéraux (4) de plancher, les renforts latéraux (4) présentant un bord interne (7) comportant une bande de soudage (7a), tel que le châssis comporte une zone rehaussée de plancher formant à la fois assise de siège et logement (34) pour un réservoir d'énergie, comportant une plaque formant support d'assise (21) disposée par-dessus une plaque de rehausse formant un renfort transversal (5) fixé par soudure sur les deux renforts latéraux (4) de plancher, la plaque formant support d'assise (21) étant disposée par dessus une pièce de rehausse arrière (14) fixée par soudure sur la traverse centrale arrière et par-dessus deux plaques formant pièces de rehausse latérales (13) et fixées par soudure chacune le long d'une desdites bandes de soudage (7a) d'un des renforts latéraux (4), la plaque formant support d'assise (21) du plancher étant fixée par soudure sur les deux pièces de rehausse latérales (13), sur la pièce de rehausse arrière (14) et sur le renfort transversal (5).

2. Châssis de véhicule automobile selon la revendication 1, dans lequel le plancher présente en outre une partie arrière (6) fixée par soudure aux deux longerons (2) et à la pièce de rehausse arrière (14).

3. Châssis de véhicule auto-mobile selon les revendications 1 ou 2, dans lequel la plaque formant support d'assise (21) du plancher présente une plaque avant (22) recouvrant le renfort transversal (5), et assemblée au renfort transversal par au moins deux cordons de soudure (35, 36) de manière à former un corps creux (46) limité par la plaque avant et par le renfort transversal.

4. Châssis de véhicule automobile selon l'une des revendications précédentes, dans lequel le renfort transversal (5) s'étend transversalement entre les bords internes (7) des deux renforts latéraux (4) de plancher, sans déborder transversalement de ces bords internes.

5. Châssis de véhicule automobile selon l'une des revendications précédentes, dans lequel la pièce de rehausse arrière (14) comprend une plaque verticale (19) et une plaque horizontale (18) par laquelle se fait la fixation par soudure sur la traverse centrale arrière (3), un caisson creux (33) de renfort étant défini du côté arrière, par ladite plaque horizontale (18), une plaque formant cadre de fermeture (25) fixée par soudure sur la plaque horizontale et une prolongation (30) de la plaque formant support d'assise du plancher (21).

6. Châssis de véhicule automobile selon la revendication 5,
dans lequel le caisson creux (33) de renfort comporte, à l'intérieur, au moins un renfort d'ancrage (24) fixé à la plaque verticale (19) de la pièce de rehausse arrière (14) et au cadre de fermeture (25).

7. Procédé d'assemblage d'éléments constitutifs d'un châssis de véhicule automobile comprenant les étapes suivantes :
- on fournit une partie, inférieure de châssis comportant deux longerons (2) de section en U recouverts recouverts et fermés dans leur partie supérieure sur l'avant par deux plaques formant renforts latéraux (4) de plancher, et comprenant une traverse centrale arrière (3) joignant les longerons et affleurant au niveau des renforts latéraux (4) de plancher, les renforts latéraux (4) présentant un bord interne (7) comportant une bande de soudage (7a),
**caractérisé en ce que** :
- on assemble sur cette partie inférieure, une zone rehaussée de plancher formant à la fois assise de siège et logement (34) pour un réservoir d'énergie, en fixant par soudure aux deux renforts latéraux (4) de plancher, une plaque de rehausse formant un renfort transversal (5) entre ces deux renforts latéraux (4), en fixant par soudure sur la traverse centrale arrière une pièce de rehausse arrière (14), en fixant par soudure deux plaques formant des pièces de rehausse latérales (13), chacune le long d'une desdites bandes de soudage (7a) d'un des renforts latéraux (4), et en assemblant une plaque formant support d'assise (21) du plancher par soudure sur les deux pièces de rehausse latérales (13), sur la pièce de rehausse arrière (14) et sur le renfort transversal (5), par-dessus les trois pièces de rehausse et par-dessus le renfort transversal.

8. Procédé selon la revendication 7, dans lequel on fixe par soudure aux deux longerons (2) et à la pièce de rehausse arrière (14), une partie arrière de plancher (6).

## Patentansprüche

1. Kraftfahrzeugchassis (1), das zwei Längsträger (2) mit U-förmigem Querschnitt und an ihrem oberen Teil über einen vorderen Teil durch zwei seitliche Bodenverstärkungen (4) bildende Platten bedeckt und verschlossen, und einen hinteren zentralen Querträger (3) aufweist, der die Längsträger verbindet und im Bereich der seitlichen Bodenverstärkungen (4) bündig anliegt, wobei die seitlichen Verstärkungen (4) einen Innenrand (7) mit einem Schweißstreifen (7a} aufweisen, wobei das Chassis einen erhöhten Bodenbereich aufweist, der gleichzeitig eine Sitzfläche und eine Aufnahme (34) für einen Energiespeicher bildet, der eine einen Sitzflächenträger (21) bildende Platte aufweist, die über einer Aufsatzplatte angeordnet ist, die eine Querverstärkung (5) bildet, die durch Schweißen an den zwei seitlichen Bodenverstärkungen (4) befestigt ist, wobei die einen Sitzflächenträger formende Platte (21) über einem hinteren Aufsatzbauteil (14), das durch Schweißen am hinteren zentralen Querträger befestigt ist, und über zwei Platten angeordnet ist, die seitliche Aufsatzbauteile (13) bilden und durch Schweißen je entlang eines der zwei Schweißstreifen (7a) einer der seitlichen Verstärkungen (4) befestigt sind, wobei die einen Sitzflächenträger (21) des Bodens bildende Platte durch Schweißen an den zwei seitlichen Aufsatzbauteilen (13), am hinteren Aufsatzbauteil (14) und an der Querverstärkung (5) befestigt ist.

2. Fahrzeugchassis nach Anspruch 1, wobei der Boden außerdem einen hinteren Teil (6) aufweist, der durch Schweißen an den zwei Längsträgern (2) und am hinteren Aufsatzbauteil (14) befestigt ist.

3. Fahrzeugchassis nach Anspruch 1 oder 2, wobei die einen Sitzflächenträger (21) des Bodens bildende Platte eine vordere Platte (22) aufweist, die die Querverstärkung (5) bedeckt und an die Querverstärkung durch mindestens zwei Schweißnähte (35, 36) montiert ist, um einen Hohlkörper (46) zu bilden, der durch die vordere Platte und durch die Querverstärkung begrenzt wird.

4. Fahrzeugchassis nach einem der vorhergehenden Ansprüche, wobei die Querverstärkung (5) sich quer zwischen den Innenrändern (7) der zwei seitlichen Bodenverstärkungen (4) erstreckt, ohne quer über diese Innenränder vorzustehen.

5. Fahrzeugchassis nach einem der vorhergehenden Ansprüche, wobei das hintere Aufsatzbauteil (14) eine senkrechte Platte (19) und eine waagrechte Platte (18) enthält, über die die Schweißbefestigung am hinteren zentralen Querträger (3) erfolgt, wobei ein Verstärkungshohlkasten (33) an der Rückseite durch die waagrechte Platte (18), eine einen Schließrahmen (25) bildende Platte, die durch Schweißen an der waagrechten Platte befestigt ist, und eine Verlängerung (30) der Platte definiert wird, die den Sitzflächenträger des Bodens (21) bildet.

6. Fahrzeugchassis nach Anspruch 5, wobei der Verstärkungshohlkasten (33) innen mindestens eine Verankerungsverstärkung (24) aufweist, die an der senkrechten Platte (19) des hinteren Aufsatzbauteils (14) und am Schließrahmen (25) befestigt ist.

7. Verfahren zur Montage von Bauelementen eines Fahrzeugchassis, das die folgenden Schritte enthält:
- Bereitstellen eines unteren Chassisteils, der zwei Längsträger (2) mit U-förmigem Querschnitt und an ihrem oberen Teil vorne durch zwei seitliche Bodenverstärkungen (4) bildende Platten bedeckt und verschlossen aufweist, und einen hinteren zentralen Querträger (3) enthält, der die Längsträger verbindet und im Bereich der seitlichen Bodenverstärkungen (4) bündig anliegt, wobei die seitlichen Verstärkungen (4) einen Innenrand (7) haben, der einen Schweißstreifen (7a} aufweist,
**dadurch gekennzeichnet, dass**:
- auf diesen unteren Teil ein erhöhter Bodenteil montiert wird, der gleichzeitig eine Sitzfläche und eine Aufnahme (34) für einen Energiespeicher bildet, indem eine eine Querverstärkung (5) zwischen diesen zwei seitlichen Verstärkungen (4) bildende Aufsatzplatte durch Schweißen an den zwei seitlichen Bodenverstärkungen (4) befestigt wird, indem ein hinteres Aufsatzbauteil (14) durch Schweißen am hinteren zentralen Querträger befestigt wird, indem zwei seitliche Aufsatzbauteile (13) bildende Platten je entlang eines der Schweißstreifen (7a) einer der seitlichen Verstärkungen (4) durch Schweißen befestigt werden, und indem eine einen Sitzflächenträger (21) des Bodens bildende Platte durch Schweißen an die zwei seitlichen Aufsatzbauteile (13), an das hintere Aufsatzbauteil (14) und an die Querverstärkung (5) über den drei Aufsatzbauteilen und über der Querverstärkung montiert wird.

8. Verfahren nach Anspruch 7, wobei ein hinterer Bodenteil (6) durch Schweißen an den zwei Längsträgern (2) und am hinteren Aufsatzbauteil (14) befestigt wird.

## Claims

1. Motor vehicle chassis (1) comprising two longitudinal members (2) of U-shaped section which are covered and closed in their upper part on a front part by two plates forming lateral floor reinforcements (4), and a rear central crossmember (3) connecting the longitudinal members and flush in the region of the lateral floor reinforcements (4), the lateral reinforcements (4) having an internal edge (7) comprising a welding strip (7a), such the chassis comprises a raised floor area forming both a seat and a housing (34) for an energy storage tank, comprising a plate forming a seat-cushion support (21) arranged above a raiser plate forming a transverse reinforcement (5) fixed by welding to the two lateral floor reinforcements (4), the plate forming a seat-cushion support (21) being arranged above a rear raiser part (14) fixed by welding to the rear central crossmember and above two plates forming lateral raiser parts (13) and each fixed by welding along one of said welding strips (7a) of one of the lateral reinforcements (4), the plate forming a seat-cushion support (21) of the floor being fixed by welding to the two lateral raiser parts (13), to the rear raiser part (14) and to the transverse reinforcement (5).

2. Motor vehicle chassis according to Claim 1, in which the floor also has a rear part (6) fixed by welding to the two longitudinal members (2) and to the rear raiser part (14).

3. Motor vehicle chassis according to Claim 1 or 2, in which the plate forming a seat-cushion support (21) of the floor has a front plate (22) covering the transverse reinforcement (5) and assembled to the transverse reinforcement by at least two weld beads (35, 36) so as to form a hollow body (46) delimited by the front plate and the transverse reinforcement.

4. Motor vehicle chassis according to one of the preceding claims, in which the transverse reinforcement (5) extends transversely between the internal edges (7) of the two lateral floor reinforcements (4), without extending transversely beyond said internal edges.

5. Motor vehicle chassis according to one of the preceding claims, in which the rear raiser part (14) comprises a vertical plate (19) and a horizontal plate (18) by which the fixing by welding to the rear central crossmember (3) is carried out, a hollow reinforcing box structure (33) being defined on the rear side by said horizontal plate (18), a plate forming a closing frame (25) fixed by welding to the horizontal plate and an extension (30) of the plate forming a seat-cushion support (21) of the floor.

6. Motor vehicle chassis according to Claim 5, in which the hollow reinforcing box structure (33) comprises, on the inside, at least one anchoring reinforcement (24) fixed to the vertical plate (19) of the rear raiser part (14) and to the closing frame (25).

7. Method for assembling constituent elements of a motor vehicle chassis comprising the following steps:
- a lower chassis part is provided, said lower chassis part comprising two longitudinal members (2) of U-shaped section which are covered and close in their upper part at the front by two plates forming lateral floor reinforcements (4) and comprising a rear central crossmember (3) joining the longitudinal members and flush in the region of the lateral floor reinforcements (4), the lateral reinforcements (4) having an internal edge (7) comprising a welding strip (7a),
**characterized in that**:
- a raised floor area is assembled on said lower part, forming both a seat and a housing (34) for an energy storage tank, by fixing by welding to the two lateral floor reinforcements (4) a raiser plate forming a transverse reinforcement (5) between said two lateral reinforcements (4), by fixing by welding to the rear central crossmember a rear raiser part (14), by fixing by welding two plates forming lateral raiser parts (13), each along one of said welding strips (7a) of one of the lateral reinforcements (4), and by assembling a plate forming a seat-cushion support (21) of the floor by welding to the two lateral raiser parts (13), to the rear raiser part (14) and to the transverse reinforcement (5), above the three raiser parts and above the transverse reinforcement.

8. Method according to Claim 7, in which a rear floor part (6) is fixed by being welded to the two longitudinal members (2) and to the rear raiser part (14).
